# EUROPÄISCHE PATENTSCHRIFT

(11) **EP 0 911 233 B1**
(45) Veröffentlichungstag und Bekanntmachung des Hinweises auf die Patenterteilung: **12.12.2001**
(21) Anmeldenummer: 98117222.4
(22) Anmeldetag: 11.09.1998
(51) Int. Cl.: B60S 3/06

(54) **Vorrichtung zum Waschen oder Polieren von Fahrzeugen**
Device for washing and polishing vehicles
Dispositif de lavage et de polissage de véhicules

(30) Priorität: 16.10.1997 DE 29718402 U
(43) Veröffentlichungstag der Anmeldung: 28.04.1999
(73) Patentinhaber: WashTec Holding GmbH, 86153 Augsburg (DE)
(72) Erfinder: Zeyer, Pierre, 68500 Wuenheim (FR); Decker, Wolfgang, 86441 Zusmarshausen-Wollbach (DE)
(74) Vertreter: Rapp, Bertram

(56) Entgegenhaltungen:
- EP-A- 0 811 537
- DE-B- 1 280 073
- US-A- 5 361 443

## Beschreibung

Die Erfindung betrifft eine Vorrichtung zum Waschen oder Polieren von Fahrzeugen mit mindestens einer, um ihre vertikale Achse (Drehachse) drehantreibbar gelagerten Arbeitswalze, welche eine Vielzahl einzelner Arbeitselemente, wie Borsten, Lappen, Streifen oder dgl. aufweist, und welche in einem Gestell drehbar und in Richtung ihrer Drehachse verschiebbar angeordnet ist, wobei Arbeitswalze und Fahrzeug im wesentlichen senkrecht zur Drehachse relativ zueinander bewegbar sind.

Die DE-OS 16 30 469 offenbart eine Vorrichtung zum Waschen von Fahrzeugen mit insgesamt drei Waschwalzen, von denen zwei um im wesentlichen vertikale Drehachsen und eine um eine horizontale Drehachse drehantreibbar in einem Gestell gelagert sind. Außerdem sollen die Waschwalzen gleichzeitig eine hin- und hergehende Bewegung in Richtung ihrer Drehachsen ausführen. In der DE-OS 16 30 469 sind jedoch keine weiteren Angaben darüber enthalten, durch welche speziellen Mittel die hin- und hergehende Bewegung bewirkt wird.

Weiterhin ist es bei Vorrichtungen zum Waschen oder Polieren von Fahrzeugen bekannt (vgl. DE 195 24 748 A1), zum Antrieb und zur Lagerung einer Waschwalze mit im wesentlichen vertikaler Drehachse eine vertikale Antriebswelle vorzusehen, die in einem Lagergehäuse drehbar gelagert ist. Die Arbeitswalze ist mit dem unteren Ende dieser Antriebswelle verbindbar, während am oberen Ende der Antriebswelle ein aus Motor und Getriebe bestehendes Antriebsaggregat angreift. Das Antriebsaggregat ist hierbei fest mit dem oberen Ende des Lagergehäuses verbunden. Das Lagergehäuse selbst ist um eine horizontale Schwenkachse, die quer zur Relativbewegungsrichtung von Fahrzeug und Gestell verläuft, schwenkbar in einem Laufwagen gelagert. Bei dieser bekannten Waschvorrichtung führt jedoch die Waschwalze keine zusätzliche Bewegung in Richtung ihrer Drehachse aus.
Dies hat den Nachteil, daß in unmittelbarer Nähe von vorstehenden Teilen, wie Schrammleisten, Zierleisten, Rückspiegeln und dgl., sowie auch bei Vertiefungen z.B. im Fensterbereich, Zonen verbleiben, in denen der Schmutz überhaupt nicht oder nur ungenügend entfernt wird. Diese Zonen werden als "Waschschatten" bezeichnet und sind darauf zurückzuführen, daß die Waschelemente durch die vorstehenden Teile zur Seite gedrängt werden.

Der Erfindung liegt die Aufgabe zugrunde, eine Vorrichtung zum Waschen oder Polieren von Fahrzeugen der eingangs erwähnten Art aufzuzeigen, die einen einfachen Aufbau aufweist, kostengünstig herstellbar ist und ein gutes Wasch- bzw. Polierergebnis sicherstellt.

Dies wird bei einer Vorrichtung zum Waschen oder Polieren der eingangs erwähnten Art nach der Erfindung dadurch erreicht, daß eine mit dem oberen Ende der Arbeitswalze verbindbare, im wesentlichen vertikale Antriebswelle in einer Zwischenbüchse axial verschiebbar ist, daß die Zwischenbüchse in einem sie umgebenden, gegenüber dem Gestell abgestützten Lagergehäuse drehbar gelagert ist und daß die Antriebswelle oberhalb oder unterhalb des Lagergehäuses von einem Stützring konzentrisch umgeben ist, der gegenüber der Antriebswelle drehbar, jedoch axial unverschiebbar ist und an seinem unteren Ende eine gegenüber der Drehachse geneigte Stützfläche aufweist, mit welcher er sich auf einer von dem Lagergehäuse getragenen Stützrolle abstützt, daß zwischen Antriebswelle und Stützring ein Planetengetriebe angeordnet ist, dessen Planetenradträger ortsfest angeordnet ist, dessen Sonnenrad mit der Antriebswelle und dessen Hohlrad mit dem Stützring verbunden ist, daß am oberen Ende der Antriebswelle ein von dieser getragenes, aus Motor und Getriebe bestehendes Antriebsaggregat angeordnet ist und daß mit diesem zur Übertragung der Reaktionskraft desselben auf das Lagergehäuse ein Haltearm verbunden ist, der gegenüber dem Lagergehäuse unverdrehoar festgelegt, jedoch axial in Richtung der Drehachse verschiebbar ist.

Durch das die Antriebswelle konzentrisch umgehende Planetengetriebe wird ein einfacher Aufbau und auch eine sehr kompakte Bauweise erreicht. Das Planetengetriebe setzt den Stützring gegenüber der Antriebswelle in Drehung und bewirkt mittels der schrägen Stützfläche und der Antriebsrolle eine in Richtung der Drehachse hin- und hergehende Bewegung der Antriebswelle und damit auch der mit ihr verbundenen Arbeitswalze. Es ist infolgedessen kein eigener Antriebsmotor mit Getriebe zur Erzeugung der Auf- und Abbewegung der Antriebswelle bzw. der Arbeitswalze erforderlich. Durch das Planetengetriebe findet eine Untersetzung der Drehzahl der Antriebswelle statt, d.h. der Stützring dreht sich mit einer geringeren Geschwindigkeit als die Antriebswelle. Das Untersetzungsverhältnis kann durch entsprechende Auslegung des Planetengetriebes so gewählt werden, daß ein optimaler Wasch- bzw. Poliereffekt erreicht wird.
So hat es sich gezeigt, daß ein Untersetzungsverhältnis von 2 : 1 besonders vorteilhaft ist. Wenn beispielsweise die Arbeitswalze mit einer Geschwindigkeit von 120 U/min angetrieben wird, dann führt die Arbeitswalze 60 Hübe pro Minute aus. Da die Hubfrequenz geringer ist als die Drehzahl, werden auch die durch die Auf- und Abbewegung der Arbeitswalze entstehenden Massenkräfte in Grenzen gehalten. Dank der kompakten Bauweise der erfindungsgemäßen Vorrichtung, kann diese in Portalwaschanlagen oder Waschstraßen herkömmlicher Bauweise eingesetzt werden. Es können daher die gleichen Baugruppen wie Portal (= Gestell), Laufwagen und dgl., wie sie für Waschwalzen, die keine Auf- und Abbewegung ausführen, verwendet werden, auch in Kombination mit der erfindungsgemäßen Vorrichtung eingesetzt werden. Auch dies ermöglicht eine kostengünstige Herstellung der gesamten Wasch- oder Polieranlage. Gegebenenfalls können sogar bestehende Wasch- oder Polieranlagen mit der erfindungsgemäßen Vorrichtung nachgerüstet werden, um bei den bestehenden Anlagen den Wasch- oder Poliereffekt zu verbessern.

Vorteilhafte Ausgestaltungen der Erfindung sind in den Unteransprüchen gekennzeichnet.

Die Erfindung wird in folgendem, anhand eines in der Zeichnung dargestellten Ausführungsbeispieles näher erläutert.

Es zeigen:

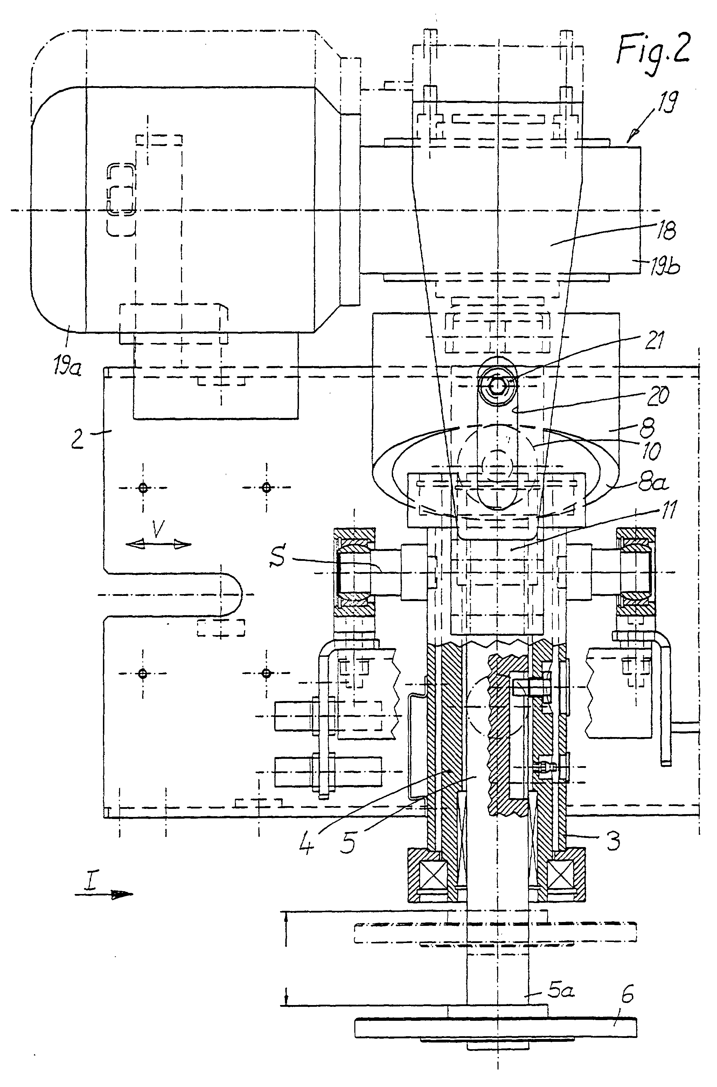

- Figur 1: eine Seitenansicht der Vorrichtung, teilweise im Schnitt in Richtung I der Figur 2 gesehen,
- Figur 2: eine Stirnansicht der Vorrichtung, ebenfalls teilweise im Schnitt, in Richtung II der Figur 1 gesehen,

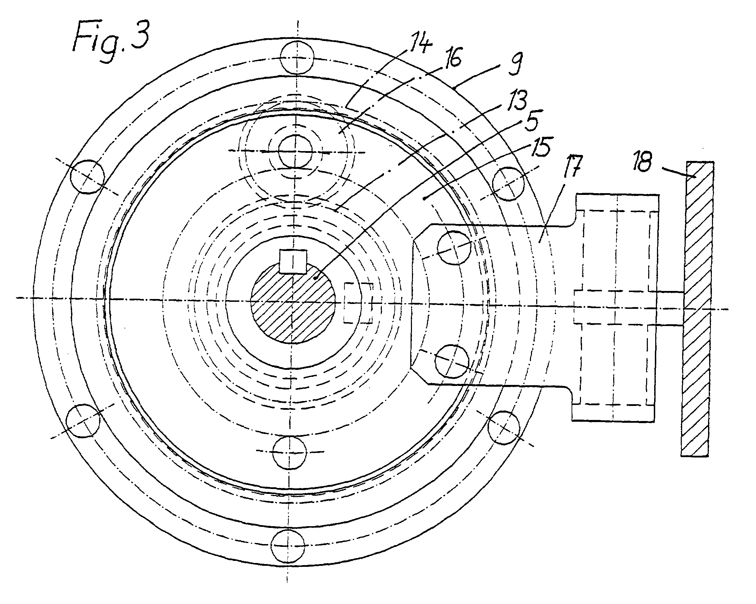

- Figur 3: einen Teilquerschnitt nach der Linie III-III der Figur 1.

In den Zeichnungen ist nur der obere Teil einer Vorrichtung zum Waschen oder Polieren von Fahrzeugen dargestellt. An einem Gestell 1, z.B. einem Portal, ist ein Laufuagen 2 horizontal und quer zur Relativbewegungsrichtung B von Fahrzeug und Arbeitswalze verschiebbar gelagert. In dem Laufuagen 2 ist ein Lagergehäuse 3 um eine horizontale Schwenkachse S schwenkbar gelagert. Die Schwenkachse S verläuft ebenfalls quer zur Relativbewegungsrichtung B, d.h. in Verschieberichtung U des Laufwagens 2.

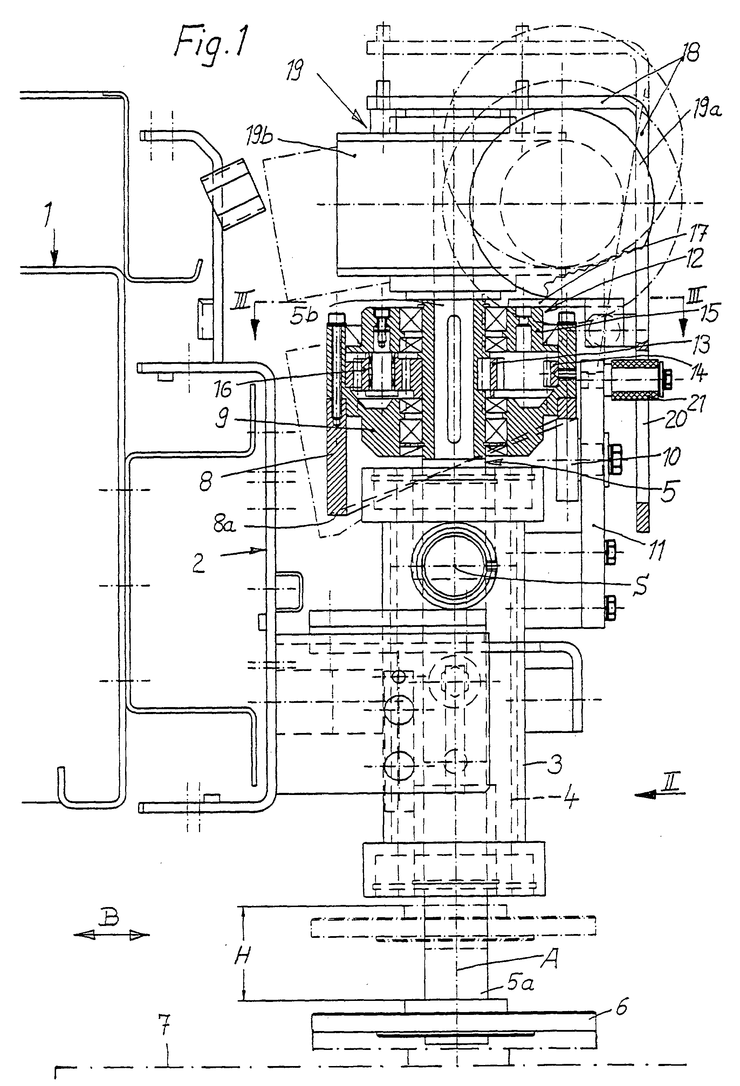

In dem Lagergehäuse 3 ist eine Zwischenbüchse 4 drehbar gelagert. In dieser Zwischenbüchse 4 ist eine im wesentlichen vertikale Antriebswelle 5 in Richtung ihrer Drehachse A axial verschiebbar angeordnet. Am unteren Ende 5a der Antriebswelle 5 ist ein Flansch 6 befestigt, mit dem eine Arbeitswalze verbindbar ist. Das obere Ende dieser Arbeitswalze 7 ist nur in Figur 1 strichpunktiert dargestellt. Die Arbeitswalze selbst weist in bekannter Weise eine Vielzahl einzelner Arbeitselemente, wie Borsten, Lappen, Streifen oder dgl. auf, wobei die Arbeitselemente dem jeweiligen Einsatzzweck der Arbeitswalze 7 als Waschwalze oder Polierwalze angepaßt sind.

Die Antriebswelle 5 ist oberhalb des Lagergehäuses 3 von einem Stützring 8 konzentrisch umgeben. Dieser Stützring 8 ist mittels des Tragtopfes 9 gegenüber der Antriebswelle 5 drehbar, jedoch axial unverschiebbar gelagert. Der Stützring 8 weist an seinem unteren Ende eine gegenüber der Drehachse A geneigte Stützfläche 8a auf, die sich an einer Stützrolle 10 abstützt. Die Stützfläche 8a ist gegenüber der Drehachse A so geneigt, daß sich hierdurch der gewünschte Axialhub H der Antriebswelle 5 bzw. der mit ihr verbundenen Arbeitswalze 7 ergibt. Ein Hub H von etwa 60 mm hat sich als besonders geeignet erwiesen. Die Stützrolle 10 ist an einem Tragarm 11 gelagert, der seinerseits mit dem Lagergehäuse 3 verbunden ist.

Um den Stützring 8 mit einer gegenüber der Drehzahl der Antriebswelle 5 geringeren Drehzahl anzutreiben, ist zwischen dem Stützring 8 bzw. dessen Tragtopf 9 und der Antriebswelle 5 ein Planetengetriebe 12 vorgesehen, welches die Antriebswelle 5 konzentrisch umgibt. Das Sonnenrad 13 dieses Planetengetriebes ist mit der Antriebswelle 5 verbunden. Das Hohlrad 14 ist an der Innenseite des Tragtopfes 9 angeordnet. Ein Planetenradträger 15 ist auf der Antriebswelle drehbar gelagert und trägt ein gleichzeitig mit dem Sonnenrad 13 und dem Hohlrad 14 kämmendes Planetenrad 16. Um den Planetenradträger 15 gegen Drehung zu sichern, greift an ihm eine Verbindungslasche 17 an, die mit einem nachstehend noch näher beschriebenen Haltearm 18 verbunden ist. Die Anordnung von Stützring 8 und Planetengetriebe 12 oberhalb des Lagergehäuses 3 ist besonders vorteilhaft, wenn man die übrigen Bauteile und Baugruppen der Wasch- bzw. Polieranlage weitgehend unverändert beibehalten möchte. Gegebenenfalls könnte jedoch der Stützring 8 und das Planetengetriebe 12 auch unterhalb des Lagergehäuses 3 angeordnet sein.

Am oberen Ende 5b der Antriebswelle 5 ist ein Antriebsaggregat 19, bestehend aus Motor 19a und Getriebe 19b, angeordnet. Dieses Antriebsaggregat 19 wird von der Antriebswelle 5 getragen. Mit dem Antriebsaggregat 19 ist ein Haltearm 18 verbunden, der einen vertikalen Längsschlitz 20 aufweist. In diesen Längsschlitz 20 greift eine Rolle 21 ein, die am Tragarm 11 gelagert ist. Auf diese Weise ist der Haltearm 18 gegenüber dem Lagergehäuse 3 unverdrehbar festgelegt, jedoch axial in Richtung der Drehachse A verschiebbar. Der Haltearm 18 dient zur Übertragung der Reaktionskraft des Antriebsaggregates 19 auf das Lagergehäuse 3.

Durch das Antriebsaggregat 19 wird die Antriebswelle 5 mit der gewünschten Drehzahl von beispielsweise 120 U/min angetrieben. Das mit ihr verbundene Sonnenrad 13 treibt über das Planetenrad 16 das Hohlrad an. Hierdurch wird der Tragtopf 9 und der mit ihm verbundene Stützring 8 mit verringerter Drehzahl entsprechend dem gewählten Untersetzungsverhältnis des Planetengetriebes 12 von beispielsweise 2 : 1 angetrieben. Bei Drehung des Stützringes 8 läuft dessen schräge Stützfläche 8a an der Stützrolle 10 ab, wodurch die Antriebswelle 5 in eine vertikale Auf- und Abbewegung versetzt wird. Bei einer Drehzahl der Antriebswelle von 120 U/min und einem Untersetzungsverhältnis von 2 : 1 beträgt die Hubfrequenz 60 Hübe pro Minute. Bei der Auf- und Abbewegung der Antriebswelle 5 wird auch das von ihr getragene Antriebsaggregat 19 auf- und abbewegt. Wenn die Waschwalze 7 durch das Fahrzeug in Relativbewegungsrichtung B ausgeschwenkt wird, dann führen auch die Antriebswelle 5, das Lagergehäuse 3, der Stützring 8 und das Antriebsaggregat 19 eine entsprechende Schwenkbewegung aus, wie es in Figur 1 mit strichpunktierten Linien dargestellt ist.

## Patentansprüche

1. Vorrichtung zum Waschen oder Polieren von Fahrzeugen mit mindestens einer, um ihre vertikale Achse (Drehachse) drehantreibbar gelagerten Arbeitswalze, welche eine Vielzahl einzelner Arbeitselemente, wie Borsten, Lappen, Streifen oder dgl. aufweist, und welche in einem Gestell drehbar und in Richtung ihrer Drehachse verschiebbar angeordnet ist, wobei Arbeitswalze und Fahrzeug im wesentlichen senkrecht zur Drehachse relativ zueinander bewegbar sind, **dadurch gekennzeichnet, daß** eine mit dem oberen Ende der Arbeitswalze (7) verbindbare, im wesentlichen vertikale Antriebswelle (5) in einer Zwischanbüchse (4) axial verschiebbar ist, daß die Zwischenbüchse (4) in einem sie umgebenden, gegenüber dem Gestell (1) abgestützten Lagergehäuse (3) drehbar gelagert ist, daß die Antriebswelle (5) oberhalb oder unterhalb des Lagergehäuses (3) von einem Stützring (8) konzentrisch umgeben ist, der gegenüber der Antriebswelle (5) drehbar, jedoch axial unverschiebbar ist und an seinem unteren Ende eine gegenüber der Drehachse geneigte Stützfläche (8a) aufweist, mit welcher er sich auf einer von dem Lagergehäuse (3) getragenen Stützrolle (10) abstützt, daß zwischen Antriebswelle (5) und Stützring (8) ein Planetengetriebe (12) angeordnet ist, dessen Planetenradträger (15) ortsfest angeordnet ist, dessen Sonnenrad (13) mit der Antriebswelle (5) und dessen Hohlrad (14) mit dem Stützring (8) verbunden ist, daß am oberen Ende (5b) der Antriebswelle (5) ein von dieser getragenes, aus Motor (19a) und Getriebe (19b) bestehendes Antriebsaggregat (19) angeordnet ist, und daß mit diesem zur Übertragung der Reaktionskraft desselben auf das Lagergehäuse (3) ein Haltearm (18) verbunden ist, der gegenüber dem Lagergehäuse (3) unverdrehbar festgelegt, jedoch axial in Richtung der Drehachse (A) verschiebbar ist.

2. Vorrichtung nach Anspruch 1, **dadurch gekennzeichnet, daß** ein die Antriebswelle (5) konzentrisch umgebender Planetenradträger (15) des Planetengetriebes (12) über eine Verbindungslasche (17) mit dem Haltearm (18) verbunden ist.

3. Vorrichtung nach Anspruch 1 oder 2, **dadurch gekennzeichnet, daß** das Untersetzungsverhältnis des Planetengetriebes (12) etwa 2 : 1 beträgt.

4. Vorrichtung nach Anspruch 1, 2 oder 3, **dadurch gekennzeichnet, daß** die Stützfläche (8a) gegenüber der Drehachse (A) so geneigt ist, daß der durch sie bewirkte Axialhub (H) der Arbeitswalze (7) etwa 60 mm beträgt.

5. Vorrichtung nach einem der Ansprüche 1 - 4, **dadurch gekennzeichnet, daß** das Lagergehäuse (3) gegenüber dem Gestell (1) um eine horizontale, quer zur Relativbewegungsrichtung (B) des Fahrzeuges gegenüber dem Gestell (1) angeordnete Schwenkachse (S) schwenkbar ist.

6. Vorrichtung nach Anspruch 5, **dadurch gekennzeichnet, daß** die Schwenkachse (S) in einem am Gestell (1) in Richtung der Schwenkachse horizontal verfahrbaren Laufwagen (2) abgestützt ist.

## Claims

1. Device for washing or polishing vehicles with at least one working roll which is mounted so that it can be driven rotatably about its vertical axis (axis of rotation) and exhibits a plurality of individual working elements, such as brushes, cloths, strips or the like, and is arranged so that it is rotatable in a frame and displaceable in the direction of its axis of rotation, whereby the working roll and the vehicle are moveable in relation to one another essentially perpendicularly to the axis of rotation, **characterised in that** an essentially vertical driving shaft (5) which can be connected with the upper end of the working roll (7), is displaceable axially in an intermediate bush (4), **in that** the intermediate bush (4) is mounted so that it is rotatable in a bearing housing (3) surrounding it and supported in relation to the frame (1), **in that** the driving shaft (5) is surrounded concentrically above or below the bearing housing (3) by a supporting ring (8) which is rotatable in relation to the driving shaft (5) but immovable axially and at its lower end exhibits a supporting surface (8a) which is inclined in relation to the axis of rotation and with which it is supported on a supporting roller (10) carried by the bearing housing (3), **in that** between the driving shaft (5) and the supporting ring (8) there is a planetary gear train (12) whose planet carrier (15) is stationary, whose sun wheel (13) is connected to the driving shaft (5) and whose annulus (14) is connected to the supporting ring (8), **in that** at the upper end (5b) of the driving shaft (5) there is a driving unit (19) which is carried by the driving shaft and consists of the motor (19a) and gear box (19b), and **in that** a holding arm (18) is connected to this driving unit to transmit the reaction force thereof to the bearing housing (3), which holding arm is locked so that it cannot rotate in relation to the bearing housing (3), but is displaceable axially in the direction of the axis of rotation (A).

2. Device according to claim 1, **characterised in that** a planet carrier (15) of the planetary gear train (12) concentrically surrounding the driving shaft (5) is connected via a connecting link (17) to the holding arm (18).

3. Device according to claim 1 or 2, **characterised in that** the reduction ratio of the planetary gear train (12) is approximately 2:1.

4. Device according to claim 1, 2 or 3, **characterised in that** the supporting surface (8a) is inclined in relation to the axis of rotation (A) so that the axial stroke (H) of the working roll (7) produced by it is approximately 60 mm.

5. Device according to one of claims 1 to 4, **characterised in that** the bearing housing (3) is pivotable in relation to the frame (1) about a horizontal pivot axis (S) arranged transversely to the direction of relative movement (B) of the vehicle in relation to the frame (1).

6. Device according to claim 5, **characterised in that** the pivot axis (S) is supported in a trolley (2) which is displaceable horizontally on the frame (1) in the direction of the pivot axis.

## Revendications

1. Dispositif pour le lavage ou le polissage de véhicules avec au moins un cylindre de travail monté à entraînement en rotation autour de son axe vertical (axe de rotation), qui présente une pluralité d'éléments de travail, tels que des brosses, des chiffons, des bandes ou analogues, et qui est agencé à rotation dans un châssis et à coulissement dans la direction de son axe de rotation, le cylindre de travail et le véhicule pouvant être déplacés l'un par rapport à l'autre sensiblement perpendiculairement à l'axe de rotation, **caractérisé en ce qu'**un arbre d'entraînement (5) sensiblement vertical qui peut être relié à l'extrémité supérieure du cylindre de travail (7) est monté à coulissement axial dans une douille intermédiaire (4), **en ce que** la douille intermédiaire (4) est montée à rotation dans un logement de palier (3) qui l'entoure et s'appuie sur le châssis (1), **en ce que** l'arbre d'entraînement (5) est entouré de manière concentrique, au-dessus ou au-dessous du logement de palier (3), par un anneau d'appui (8), qui peut tourner par rapport à l'arbre d'entraînement (5), mais ne peut coulisser axialement et présente, à son extrémité inférieure, une surface d'appui (8a) inclinée par rapport à l'axe de rotation, avec laquelle il s'appuie sur un rouleau d'appui (10) porté par le logement de palier (3), **en ce que**, entre l'arbre d'entraînement (5) et l'anneau d'appui (8) est agencé un engrenage planétaire (12), dont le porte-satellite (15) est agencé fixe, dont la roue solaire (13) est reliée à l'arbre d'entraînement (5) et dont la couronne de train planétaire (14) est reliée à l'anneau d'appui (8), **en ce que**, à l'extrémité supérieure (5b) de l'arbre d'entraînement (5) est agencé un groupe d'entraînement (19) porté par celui-ci et constitué d'un moteur (19a) et d'une transmission (19b), et **en ce qu'**à celui-ci est relié, pour la transmission de la force de réaction de ce groupe sur le logement de palier (3), un bras de retenue (18) qui est fixé de manière à ne pas pouvoir toumer par rapport au logement de palier (3), mais peut coulisser axialement dans la direction de l'axe de rotation (A).

2. Dispositif selon la revendication 1, **caractérisé en ce qu'**une couronne de train planétaire (15) de l'engrenage planétaire (12) entourant concentriquement l'arbre d'entraînement (5) est relié au bras de retenue (18) via une patte de liaison (17).

3. Dispositif selon la revendication 1 ou 2, **caractérisé en ce que** le rapport de démultiplication de l'engrenage planétaire (12) est d'environ 2:1.

4. Dispositif selon la revendication 1, 2 ou 3, **caractérisé en ce que** la surface d'appui (8a) est inclinée par rapport à l'axe de rotation (A) de sorte que la course axiale (H) du cylindre de travail (7) effectuée par celui-ci atteigne environ 60 mm.

5. Dispositif selon l'une quelconque des revendications 1-4, **caractérisé en ce que** le logement de palier (3) peut être soumis à un pivotement par rapport au châssis (1) autour d'un axe de pivotement (S) horizontal agencé transversalement à la direction de mouvement relative (B) du véhicule par rapport au châssis (1).

6. Dispositif selon la revendication 5, **caractérisé en ce que** l'axe de pivotement (S) s'appuie dans un chariot roulant déplaçable sur le châssis (1) horizontalement dans la direction de l'axe de pivotement.
